# EUROPÄISCHE PATENTANMELDUNG

(11) **EP 1 050 553 A1**
(43) Veröffentlichungstag der Anmeldung: **08.11.2000**
(21) Anmeldenummer: 00108026.6
(22) Anmeldetag: 20.04.2000
(51) Int. Cl.: C08G 77/12, C08L 83/04, C08K 5/5419

(54) **Vernetzer**

(30) Priorität: 06.05.1999 DE 19920954
(71) Anmelder: Wacker-Chemie GmbH, 81737 München (DE)
(72) Erfinder: Fink, Peter, Dr., 84561 Mehring (DE); Jerschow, Peter, Dr., 84489 Burghausen (DE); Schreiter, Hedwig, 84529 Tittmoning (DE); Birneder, Richard, 84359 Simbach (DE); Riedl, Alois, 84489 Burghausen (DE)
(74) Vertreter: Fritz, Helmut, Dr.

(57) **Zusammenfassung**

Beschrieben werden Polyorganosiloxane enthaltend Einheiten (HR₂Si-O_{1/2})HM-Einheiten, (Si-O_{4/2}) Q-Einheiten, (R₁Si-O_{3/2}) T-Einheiten und R₂Si-O_{2/2} D-Einheiten im Verhältnis von 2:1:0:0 bis 6:4:2:2 oder (HR₂Si-O_{1/2})HM-Einheiten, (R₁Si-O_{3/2}) T-Einheiten, R₂Si-O_{2/2} D-Einheiten und R₂(R¹O)Si-O_{1/2})HM:T:D:Malkoxy im Verhältnis von 1:2:0:0 bis 3:4:2:2,
worin
R gleich oder verschieden, gegebenenfalls halogenierte Kohlenwasserstoffreste mit 1-18 Kohlenstoffatomen je Rest oder OR¹ bedeutet, wobei R¹ einen einwertigen gegebenenfalls substituierten Kohlenwasserstoffrest mit 1-8 Kohlenstoffatom(en) bedeutet und mindestens 3 Si-gebundene Wasserstoffatome pro Molekül vorhanden sind.

## Beschreibung

Die Erfindung betrifft ein Polyorganosiloxan sowie ein Verfahren zur Herstellung von Siliconelastomeren und Zusammensetzungen, die dieses Polyorganosiloxan enthalten.

Vernetzer für additionsvernetzende Harzzusammensetzungen mit Q-Einheiten und einem Wasserstoffgehalt von 1% sind aus EP-A 0 565 238 bekannt. Nachteilig an dieser Zusammensetzung ist eine langsame Vulkanisation und somit eine längere Zykluszeit beim Verarbeiten in der Spritzgußmaschine und unbefriedigende mechanische Eigenschaften.

Aufgabe der Erfindung ist es den Stand der Technik zu verbessern und insbesondere Vernetzer zur Verfügung zu stellen, die die Weiterreißfestigkeit, Reißdehnung, Reißfestigkeit von Harzzusammensetzungen verbessern.

Gegenstand der Erfindung ist ein Polyorganosiloxan enthaltend Einheiten (HR₂Si-O_{1/2}) HM-Einheiten, (Si-O_{4/2}) Q-Einheiten, (R₁Si-O₃/₂) T-Einheiten und (R₂Si-O_{2/2}) D-Einheiten im Verhältnis von 2:1:0:0 bis 6:4:2:2 oder (HR₂Si-O_{1/2}) HM-Einheiten, (R₁Si-O_{3/2}) T-Einheiten, (R₂Si-O_{2/2}) D-Einheiten und R₂(R¹O)Si-O_{1/2}) HM:T:D:MAlkoxy im Verhältnis von 1:2:0:0 bis 3:4:2:2,
worin
R gleich oder verschieden, gegebenenfalls halogenierte Kohlenwasserstoffreste mit 1-18 Kohlenstoffatomen je Rest oder OR¹ bedeutet, wobei R¹ einen einwertigen gegebenenfalls substituierten Kohlenwasserstoffrest mit 1-8 Kohlenstoffatom(en) bedeutet und mindestens 3 Si gebundene Wasserstoffatome pro Molekül vorhanden sind.

Beispiele für Reste R sind vorzugsweise Alkylreste, wie der Methyl-, Ethyl-, n-Propyl-, iso-Propyl-, n-Butyl-, iso-Butyl-, tert. -Butyl-, n-Pentyl-, iso-Pentyl-, neo-Pentyl- und tert. - Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste.

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2' -Hexafluorisopropylrest, der Heptafluorisopropylrest.

Schon wegen der leichteren Zugänglichkeit ist als Rest R Methyl- oder Ethylrest bevorzugt.

Bei Rest R¹ handelt es sich bevorzugt um Wasserstoffatom und gegebenenfalls substituierte Kohlenwasserstoffreste mit 1 bis 8 Kohlenstoffatom(en), wobei Wasserstoff und Alkylreste mit 1 bis 3 Kohlenstoffatom(en), insbesondere der Methyl-, Ethyl-, und Isopropylrest, besonders bevorzugt sind.

Beispiele für Reste R¹ sind die für den Rest R genannten Beispiele mit 1 bis 8 Kohlenstoffatom(en). Diese Verbindungen werden bevorzugt als Vernetzer in Flüssigsiliconkautschuk-Systemen eingesetzt.

Bevorzugte Polyorganosiloxane sind solche mit der Formel (H(CH₃)₂SiO)₄Si (=HM4Q) oder (H(CH₃)₂SiO)₃SiCH₃ (=HM3T).

Die erfindungsgemäßen Polyorganosiloxane haben eine Viskosität von vorzugsweise 10 bis 500 000 mPa.s, besonders bevorzugt von 10 bis 100 000 mPa.s, ganz besonders bevorzugt von 10 bis 10000 mPa.s.

Die erfindungsgemäßen Polyorganosiloxane werden auch als härtesenkende Bestandteile eingesetzt.

Ein weiterer Gegenstand der Erfindung ist eine Zusammensetzung enthaltend Alkenylgruppen aufweisendes Siliconpolymer und einen Katalysator sowie das oben beschriebene Polyorganosiloxan.

Derartige Zusammensetzungen enthalten üblicherweise Alkenylgruppen aufweisende Siliconpolymere (1), wobei die Alkenylgruppen vorzugsweise Vinyl-, Allylyruppen sind, vorzugsweise handelt es sich um Polydimethylsiloxane mit Vinylendgruppen. Diese sind in Mengen von 55 bis 85 Gew.% enthalten. Ihre Herstellung wird zum Beispiel in EP 208 285 beschrieben. Ihre Viskosität beträgt vorzugsweise 0,5 bis 500 Pa s, bevorzugt 1 bis 100 Pa s und besonders bevorzugt 4 bis 50 Pa s bei einer Temperatur von 25 °C.

Des weiteren enthalten die zu Elastomeren vernetzenden Silikonkautschukmassen wahlweise verstärkende oder nicht verstärkende Füllstoffe (2). Beispiele für nicht verstärkende Füllstoffe sind Stoffe mit einer BET-Oberfläche von weniger als 50 m² /g, wie Quarzmehl, Diatomeenerde, Kreide, Kaoline und Silikaten. Als verstärkende Füllstoffe versteht man solche mit einer BET-Oberfläche von mindestens 50 m² /g, wie pyrogen erzeugtes Siliziumdioxid. Bevorzugt werden verstärkende Füllstoffe mit BET-Oberflächen von 150-300m²/g. Diese können auch hydrophobiert sein und werden in Mengen von 0 bis 40 Gew.% eingesetzt.

Als Vernetzer (3) sind die erfindungsgemäßen Vernetzer in Mengen von 0,5 bis 7 Gew.% enthalten.

Als metallischer Katalysator (4) sind übliche Platin-Hydrosilylierungskatalysatoren zu verwenden. Dieser dient für die Additionsreaktion zwischen den Alkylengruppen des oben beschriebenen Polyorganosiloxan (1) und den siliziumgebundenen Wasserstoffatomen des erfindungsgemäßen Vernetzers (3). Allgemein können sämtliche in der Literatur für additionsvernetzende Silikonkautschukmassen beschriebenen Hydrosilylierungskatalysatoren eingesetzt werden. Bevorzugt Verwendung finden hierbei Metalle wie Platin, Palladium, Iridium, Rhodium und Ruthenium, vorzugsweise werden Platin und Platinverbindungen verwendet. Besonders bevorzugt werden in Polyorganosiloxan lösliche Platin-Vinylsiloxan-Komplexe und Hexachlorplatinsäure. Diese werden in Mengen von 0,1 bis 500 Gew. ppm den zu Elastomeren vernetzenden Massen zugesetzt. Vorzugsweise werden zwischen 5 und 100 Gew.- ppm Platin-Metall verwendet, wobei sich durch die verwendeten Mengen die Vulkanisationsgeschwindigkeit steuern läßt. Des weiteren sind gegebenenfalls Zusätze (5) enthalten , die der Einstellung der Verarbeitungszeit ( Topfzeit ) der härtbaren Kautschukmassen dienen. Hierbei handelt es sich um bekannte Verzögerer (Inhibitoren) wie zum Beispiel 2-Methyl-3-butin-2-ol, 1,3-Divinyl-1,1,3-tetramethyldisiloxan und Ethinylcyclohexanol. Vorzugsweise wird der Inhibitor in Mengen von 0,01 bis 0,2 Gew.% bezogen auf das Gesamtgewicht der jeweiligen unten aufgeführten Komponenten eingesetzt.

Da die Zusammensetzung in sich reaktiv ist und daher bei Raumtemperatur langsam vulkanisiert, wird das Gemisch in zwei Komponenten aufgetrennt, von denen eine 1, 2, 4 und 5 und die anderen 1, 2, 3 und 5 enthält. Die Komponenten werden kurz vor der Verarbeitung maschinell gemischt und anschließend im Spritzguß-, Extrusions-, Transferpreß- und Rotationsschleuderguß verarbeitet.

Die vorliegende Erfindung verbessert deutlich die mechanischen Eigenschaften und die Vulkanisations-Eigenschaften. So wurde der Weiterreißwiderstand erhöht. So stieg die Reißdehnung bei einer 30 Shore-Type von ca. 700 auf knapp unter 1000. Des weiteren sank überraschenderweise die Anspringtemperatur von früher 140 °C mit dem erfindungsgemäßen Vernetzer auf unter 100, wobei die Topfzeit über drei Tagen erhalten blieb.

Die erfindungsgemäße Verbindungen können auch in Abmischung mit einem beliebigen linearen oder verzweigten Polydimethylsiloxanpolymer verwendet werden, daß mindestens eine SiH-Gruppe oder Si-Alkenylgruppe, vorzugsweise Si-Vinylgruppe aufweist.

Als Siliconpolymer mit Alkenylgruppen kann auch vorzugsweise ein Polydiorganosiloxan-Polymer, wie Polydimethylsiloxan mit Alkenylgruppen, wie vorzugsweise Vinylgruppen oder Allylgruppen in der Kette statt endständiger Alkenylgruppen, verwendet werden. Es werden damit Shorehärten zwischen 40 und 60 erzielt. Es wird vorzugsweise in Mengen von 2 bis 50 Gew.%, bevorzugt 2 bis 20 Gew.% eingesetzt. Dieses Polymer kann auch zusammen mit Polymeren verwendet werden, die endständige Alkenylgruppen, z.B. Vinylgruppen, Allylgruppen, Epoxygruppen, Methylgruppen aufweisen. Sie werden vorzugsweise im Verhältnis alkenylendständiges Polymer zu Polymeren mit Vinyl-D-Einheiten in der Kette von vorzugsweise von 25:1 bis 2,5:1 besonders bevorzugt 12:1 bis 4:1 eingesetzt.

Des weiteren bewirkt ein Zusatz von harzartigen, alkenylfunktionellen Polyorganosiloxane (Vinylwasserglasharz) eine deutliche Verbesserung der Kerbfestigkeit (Weiterreißwiderstand) von den ausgehärteten Silikonkautschukmassen (siehe Beispiel 4). Diese sind aus Einheiten von R₃SiO_{1/2}, RSiO_{3/2} und/oder SiO_{4/2} aufgebaut, wobei das molare Verhältnis zwischen den monofunktionellen und tri- oder tetrafunktionellen Einheiten im Bereich von 0,4 :1 bis 1,5 : 1 liegt. Vorzugsweise erfolgt der Zusatz in Mengen von 0 bis zu 20 Gew.% zu der Zusammensetzung aus den Komponenten (1) bis (4).

Die Vorteile der vorliegenden Erfindung bestehen darin, daß die Anspringtemperatur überraschenderweise zwischen 80 bis 120 °C und die langen Topf- und Verarbeitungszeiten der fertigen Mischung bei Raumtemperatur über 3 Tage liegt. Des weiteren besteht eine gute Verarbeitbarkeit, Entformbarkeit aus Metall- und Kunststoffformen von Massen mit der erfindungsgemäßen Verbindung und daraus geformte Elastomere sowie eine hohe Reißdehnung von bis zu 1500 % und einen hohen Weiterreißwiderstand von bis zu 60 N/mm aufweisen.

Massen mit dem erfindungsgemäßen Vernetzer werden im Spritzgußverfahren, Transferpreßverfahren, Preßvulkanisation, Extrusion, Schleuderguß, Kalandrieren, Raupenauftrag, Blasformen verarbeitet.

Verwendung finden Elastomere mit dem erfindungsgemäßen Vernetzer bei der Herstellung von Sportartikeln, Tauchermasken, Beatmungsbälgen, Katheterballons, Schnullern, Beruhigungssaugern, dünnwandigen Membranen, Schalterabdeckungen, Zündkerzensteckern, Medizinprodukten, Stromisolatoren, Einzeladerabdichtungen, Steckverbinderdichtungen, Schläuchen, Ventilen, in der 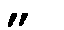 Kaltschrumpftechnik" etc.

### Beispiel I

Beispiel für die Herstellung des H-Si-haltigen Vernetzers:
8544 g Methyltriethoxysilan, 3216 g Tetramethyldihydrogensiloxan und 60 g Dimethyl-hydrogenchlorsilan werden vorgelegt und gerührt, wobei 3600 g vollentsalztes Wasser binnen 1 Std. zulaufen gelassen wird. Anschließend wird 1 Std. bei Raumfeuchtigkeit (77°C) und auf 40 °C abgekühlt. Es werden 36 g NaHCO₃ zugegeben und 1 Std. bei 40 °C gerührt und sodann wird filtriert.

Es wird ein Polyorganosiloxan mit Einheiten HM : D : T : EtO_{1/2} im Verhältnis 1 : 0,108 : 1,817 : 0,0526 in einer Ausbeute von 5303 g erhalten.

### Beispiel 1 (Vergleichsbeispiel):

Eine Basismischung (a) wurde hergestellt in dem jeweils 68 Gewichtsteile eines Vinyldimethylsiloxygruppen als endständige Einheiten aufweisende Polydimethylsiloxans (Viskosität 20 Pa*s) mit 32 Gewichtsteilen einer hydrophobierten, pyrogen erzeugten Kieselsäure mit eine BET-Oberfläche von 300 m²/g homogen vermischt wurden. Dies erfolgt am besten in dafür geeignete Mischaggregate wie z. B. einem Kneter.

Aus der Basismischung (a) wurde Komponente A erhalten, indem zu 100 Gewichtsteilen Mischung (a) 0,16 Gewichtsteile Platin-Vinylsiloxankomplex (4) und 0,06 Gewichtsteile Ethinylcyclohexanol zugegeben wurden.

Komponente B wurde erhalten durch Zugabe von 4,2 Gewichtsteilen eines Mischpolymerisats aus Dimethylsiloxan-, Methylhydrogen- und Trimethylsiloxaneinheiten mit einem Si-H-Gehalt von ca. 0,45 % und 0,06 Gewichtsteile Ethinylcyclohexanol zu 100 Gewichtsteilen Basismischung (a).

Die beiden Komponenten A und B wurden im Verhältnis 1:1 innig vermischt und daraus eine Vulkanisatplatte mit 2 und 6 mm Stärke hergestellt (Vulkanisationsbedingungen 5 min/165 °C).

### Beispiel 2 :

Aus der Basismischung (a) nach Beispiel 1 wurde Komponente A erhalten, indem zu 100 Gewichtsteile Mischung (a) 0,16 Gewichtsteile Platin-Vinylsiloxankomplex (4) und 0,06 Gewichtsteile Ethinylcyclohexanol zugegeben wurden.

Komponente B wurde erhalten durch Zugabe von 3,0 Gewichtsteilen des erfindungsgemäßen netzwerkartigen Polyorganosiloxans nach Beispiel I(3) und 0,06 Gewichtsteilen Ethinylcyclohexanol zu 100 Gewichtsteilen Basismischung (a).

Die beiden Komponenten A und B wurden im Verhältnis 1:1 innig vermischt und daraus eine Vulkanisatplatte mit 2 und 6 mm Stärke hergestellt (Vulkanisationsbedingungen 5 min/165 °C).

### Beispiel 3:

Eine Basismischung (b) wurde hergestellt in dem 59 Teile eines Vinyldimethyl-siloxygruppen als endständige Einheiten aufweisende Polydimethylsiloxans (Viskosität 100 Pa*s ), 9 Gewichtsteile eines Polydimethylsiloxans aufgebaut aus Trimethylsiloxy - und Methylvinylsiloxygruppen nach Beispiel I mit 32 Teile einer hydrophobierten, pyrogen erzeugten Kieselsäure mit eine BET-Oberfläche von 300 m²/g homogen vermischt wurden. Dies erfolgt am besten in dafür geeignete Mischaggregaten wie z. B. einem Kneter.

Aus der Basismischung (b) wurde Komponente A erhalten, indem, zu 100 Gewichtsteilen Mischung (b) 0,16 Gewichtsteile Platin-Vinylsiloxankomplex 4) und 0,06 Gewichtsteile Ethinylcyclohexanol zugegeben wurden.

Komponente B wurde erhalten durch Zugabe von 4,5 Gewichtsteilen eines Mischpolymerisats aus Dimethylsiloxan-,Methylhydrogen- und Trimethylsiloxaneinheiten nach Beispiel I und 0,06 Gewichtsteile Ethinylcyclohexanol zu 100 Gewichtsteile Basismischung (b) .

Die beiden Komponenten A und B wurden im Verhältnis 1:1 innig vermischt und daraus eine Vulkanisatplatte mit 2 und 6 mm Stärke hergestellt (Vulkanisationsbedingungen 5 min/165 °C).

### Beispiel 4:

Aus der Basismischung (a) nach Beispiel 1 wurde Komponente A erhalten, indem zu 100 Gewichtsteile Mischung (a) 0,16 Gewichtsteile Platin-Vinylsiloxankomplex (4), 15 Gewichtsteile vinylharzhaltiges Polyorganosiloxan mit einer Viskosität von 20 Pas und 0,06 Gewichtsteile Ethinylcyclohexanol zugegeben wurden.

Komponente B wurde erhalten durch Zugabe von 5,0 Gewichtsteilen eines Mischpolymerisats aus Dimethylsiloxan-, Methylhydrogen- und Trimethylsiloxaneinheiten nach Beispiel I, 15 Gewichtsteile harzhaltiges Polyorganosiloxan mit einer Viskosität von 20 Pas und 0,06 Gewichtsteile Ethinylcyclohexanol zu 100 Gewichtsteile Basismischung (a).

Die beiden Komponenten A und B wurden im Verhältnis 1:1 innig vermischt und daraus eine Vulkanisatplatte mit 2 und 6 mm Stärke hergestellt (Vulkanisationsbredingungen 5 min/165 °C).

### Beispiel 5 (Vergleichsbeispiel):

Eine Basismischung (c) wurde hergestellt in dem jeweils 72 Teile eines Vinyldimethylsiloxygruppen als endständige Einheiten aufweisende Polydimethylsiloxans Viskosität 20 Pa*s) mit 28 Teilen einer hydrophobierten, pyrogen erzeugten Kieselsäure mit einer BET-Oberfläche von 300 m²/g homogen vermischt wurden.Dies erfolgt am besten in dafür geeignete Mischaggregaten wie z. B. einem Kneter.
Aus der Basismischung (c) wurde Komponente A erhalten, indem zu 100 Gewichtsteile Mischung (c), 0,16 Gewichtsteile Platin-Vinylsiloxankomplex (4) und 0,06 Gewichtsteile Ethinylcyclohexanol zugegeben wurden.

Komponente B wurde erhalten durch Zugabe von 3,0 Gewichtsteile eines Mischpolymerisats aus Dimethylsiloxan-,Methylhydrogen- und Trimethylsiloxaneinheiten mit einem Si-H-Gehalt von ca. 0,45 % und 0,06 Gewichtsteile Ethinylcyclohexanol zu 100 Gewichtsteile Basismischung (a).

Die beiden Komponenten A und B wurden im Verhältnis 1:1 innig vermischt und daraus eine Vulkanisatplatte mit 2 und 6 mm Stärke hergestellt (Vulkanisationsbedingungen 5 min/165 °C).

### Beispiel 6 :

Eine Basismischung (C) wurde hergestellt in dem jeweils 72 Teile eines Vinyldimethylsiloxygruppen als endständige Einheiten aufweisende Polydimethylsiloxans (Viskosität 20 Pa*s) mit 28 Teilen einer hydrophobierten, pyrogen erzeugten Kieselsäure mit eine BET-Oberfläche von 300 m²/g homogen vermischt wurden. Dies erfolgt am besten in dafür geeigneten Mischaggregaten wie z. B. Kneter.

Aus der Basismischung (c) wurde Komponente A erhalten, indem zu 100 Gewichtsteile Mischung (C) 0,16 Gewichtsteile Platin-Vinylsiloxankomplex (4) und 0,06 Gewichtsteile Ethinylcyclohexanol zugegeben wurden.

Komponente B wurde erhalten durch Zugabe von 3,5 Gewichtsteile des erfindungsgemäßen netzwerkartigen Polyorganosiloxans (3) nach Beispiel I und 0,06 Gewichtsteile Ethinylcyclohexanol zu 100 Gewichtsteilen Basismischung (c).

Die beiden Komponenten A und B wurden im Verhältnis 1:1 innig vermischt und daraus eine Vulkanisatplatte mit 2 und 6 mm Stärke hergestellt (Vulkanisationsbedingungen 5 min/165 °C).

Mechanische Werte :

| **Beispiel** | **1** | **2** | **3** | **4** | **5** | **6** |
|---|---|---|---|---|---|---|
| SH A | 52 | 47 | 53 | 52 | 34 | 28 |
| RF [N/mm²] | 9,1 | 13,0 | 9,2 | 9,2 | 7,1 | 9,7 |
| RD [%] | 460 | 800 | 520 | 470 | 570 | 990 |
| WRW [N/mm) | 28,4 | 37,4 | 51,0 | 40,9 | 21,8 | 34,0 |
| AT [°C] | 115 | 101 | 116 | 113 | 115 | 100 |
| SH A = Shore A RF = Reißtestigkeit RD = Reißdehnung WRW = Weiterreißwiderstand AT = Anspringtemperatur | | | | | | |

Alle Werte wurden nach Temperung der Prütkörper von 4 Stunden bei 200 °C erhalten.

Vorteil der eingesetzten SiH-Spender wie in Beispiel 6 ist auch deren härtesenkende Wirkung. Mit Hilfe einer herkömmlichen Rezeptur liegt die Härte in Beispiel 5 bei 34. Die Härte mit den erfindungsgemäßen Vernetzern liegt bei 28, wobei die übrigen mechanischen Werte beachtlich besser sind.

## Patentansprüche

1. Polyorganosiloxan enthaltend Einheiten (HR₂Si-O_{1/2}) HM-Einheiten, (Si-O_{4/2}) Q-Einheiten, (R₁Si-O_{3/2}) T-Einheiten und R₂Si-O_{2/2} D-Einheiten im Verhältnis von 2:1:0:0 bis 6:4:2:2 oder (HR₂Si-O_{1/2}) HM-Einheiten, (R₁Si-O_{3/2}) T-Einheiten, R₂Si-O_{2/2} D-Einheiten und R₂(R¹O)Si-O_{1/2}) im Verhältnis HM:T:D:MAlkoxy von 1:2:0:0 bis 3:4:2:2,
worin
R gleich oder verschieden, gegebenenfalls halogenierte Kohlenwasserstoffreste mit 1-18 Kohlenstoffatomen je Rest oder OR¹ bedeutet, wobei R¹ einen einwertigen gegebenenfalls substituierten Kohlenwasserstoffrest mit 1-8 Kohlenstoffatom(en) bedeutet und mindestens 3 Si-gebundene Wasserstoffatome pro Molekül vorhanden sind.

2. Zusammensetzung enthaltend Alkenylyruppen aufweisendes Siliconpolymer und Platin-Vinylsiloxankomplex oder Hexachlorplatinsäure, dadurch gekennzeichnet, daß zusätzlich ein Polyorganosiloxan nach Anspruch 1 enthalten ist.

3. Zusammensetzung nach Anspruch 2, dadurch gekennzeichnet, daß eine Mischung eines Siliconpolymers mit kettenendständigen Alkenylgruppen und eines Siliconpolymers mit Alkenylgruppen in der Kette enthalten ist.

4. Zusammensetzung nach einem der Ansprüche 2 oder 3, dadurch gekennzeichnet, daß Vinylwasserglasharz enthalten ist.

5. Verfahren zur Herstellung von Siliconelastomeren, dadurch gekennzeichnet, daß eine Komponente nach Anspruch 1 verwendet wird.
